# FASCICULE DE BREVET EUROPEEN

(11) **EP 0 392 909 B1**
(45) Date de publication et mention de la délivrance du brevet: **15.09.1993**
(21) Numéro de dépôt: 90400954.5
(22) Date de dépôt: 09.04.1990
(51) Int. Cl.: F16F 13/00

(54) **Manchon élastique à amortissement hydraulique de l'élasticité radiale et découplage en rigidité**
Elastische, hydraulisch gedämpfte Buchse mit radialer Elastizität und Entkoppelung der Steifigkeiten
Hydraulically damped elastic bushing with a radial elasticity and decoupling of the rigidity

(30) Priorité: 10.04.1989 FR 8904790
(43) Date de publication de la demande: 17.10.1990
(73) Titulaire: CAOUTCHOUC MANUFACTURE ET PLASTIQUES, F-78000 Versailles (FR)
(72) Inventeur: de Fontenay, Etienne, F-58300 Decize (FR)

(56) Documents cités:
- EP-A- 0 119 796
- EP-A- 0 278 801
- EP-A- 0 304 349
- EP-A- 0 306 369

## Description

L'invention concerne le domaine des isolations antivibratoires de machines, plus spécialement les supports élastiques de moteurs d'automobiles ou de cabines de poids lourds. Elle est relative à la famille de supports élastiques, réalisés par association de parois en élastomère et de bagues rigides, la forme de l'ensemble étant sensiblement de révolution. Ces dispositifs sont désignés par le terme de manchons élastiques, la déformabilité étant utilisée de façon essentiellement radiale. Lesdits dispositifs ont pour fonction de réagir à des efforts alternés dans une direction privilégiée perpendiculaire à l'axe tout en portant une charge permanente plus ou moins élevée. Dans la direction principale de travail, un amortissement par moyen hydraulique est fondamentalement associé à la rigidité dynamique que présentent lesdits dispositifs aux différentes sollicitations.

Une première famille de suspensions élastiques dont la rigidité est assurée par des pièces en élastomère, avec amortissement hydraulique intégré des mouvements dans la même direction que celle de la charge - la charge étant disposée dans l'axe des pièces de révolution - , a reçu une évolution récente par l'intégration d'une longue colonne inertielle de liquide non visqueux dont l'effet résonant bloque la rigidité apparente dès que les sollicitations alternées dépassent une certaine gamme de fréquences.

Le perfectionnement de ce principe consiste à "découpler" les rigidités du système.

En effet, le système, hautement résonant, présente, par définition, un coefficient de transmission des accélérations résultant des sollicitations alternées très supérieur à 1. Le "découplage en rigidité" consiste a libérer - donc à abaisser considérablement - la rigidité apparente du système à inertie, sur les très faibles courses qui caractérisent les vibrations de haute fréquence.

Pour ce faire, un dispositif de faible course est interposé en série avec la rigidité apparente, sous différentes formes, son efficacité allant dans le même sens qu'une inertie faible.

Dans une autre famille du type des manchons élastiques, sont prévus des dispositifs à amortissement de l'élasticité radiale qui comportent deux volumes de liquide amortisseur, enfermés par des parois élastiques latérales assurant la rigidité et la limitation de course du rappel élastique radial. Les améliorations portent sur la circulation du liquide entre les deux chambres par un canal principal, la résonance venant empécher ladite circulation du fluide au-dessus d'une fréquence critique, ainsi que sur l'incorporation de clapets de faible inertie qui anihilent cette rigidité sur faible course.

Le brevet EP-A 0.278.801 correspond à la technique la plus proche, comme décrit dans le préambule de la revendication 1. Il comporte, pour ce faire, l'emmanchement simultané de quatre tubes permettant la formation des chambres, du canal de communication à colonne résonante, et de membranes minces de découplage, ces termes étant devenus d'usage courant dans l'art antérieur.

Tous ces dispositifs de l'art antérieur présentent une grande complexité de conception et de réalisation industrielle. Ils nécessitent le moulage de pièces en élastomère de formes compliquées et de nombreuses opérations d'assemblage, tels que des emmanchements successifs de pièces complexes.

L'expérimentation de projets destinés à satisfaire divers cahiers des charges apprend au technicien qu'une fois réglées les deux rigidités, -l'une à volume bloqué pour les hautes fréquences, l'autre à liquide circulant pour les basses fréquences-, l'amortissement apparent n'est plus déterminé que par des rapports de dimensions et par la longueur de la colonne de liquide d'amortissement.

Outre la densité du liquide, il est expliquable que la masse de la colonne résonante, reliant les deux chambres, agit dans un rapport inverse de sa section par rapport à la section équivalente d'un piston qui transfèrerait le même volume de liquide sous l'effet de l'excentrage.
Le technicien rompu à ces mises au point peut démontrer que tous les perfectionnements proposés conduisent aux mêmes effets et qu'en particulier les inerties les plus basses pour tout système découpleur sont la garantie de la meilleure efficacité alors que la masse de la colonne liquide est pratiquement imposée par le cahier des charges fixé pour l'application.

La présente invention a pour objectif la simplification des dispositions antérieures en associant un nombre minimal de pièces, les plus simples possibles, pour obtenir les mêmes résultats que ceux des dispositifs complexes connus de l'art antérieur.
Le canal de grande longueur contenant la colonne résonante reste défini par une rainure entre des tubes rigides, ménagée du fait de l'assemblage des bagues extérieures et des parois élastiques de deux chambres opposées.
Par ailleurs, le découplage en rigidité est assuré par la déformation, de faible amplitude, d'une paroi située au plus près de la bague interne aux deux chambres.
Dans ce but, l'inertie la plus basse est obtenue par la présence d'air derrière des parois minces et l'expérience enseigne que le déplacement de cette paroi fragile doit être géométriquement limité par l'appui sur une grille, sur une face ou l'autre.

L'invention consiste donc en un dispositif élastique d'isolation antivibratoire consistant en un manchon avec amortissement hydraulique de l'élasticité radiale selon la revendication 1.

L'invention ainsi que ses variantes seront mieux comprises à la lecture de la description accompagnant les dessins, dans lesquels :
- la figure 1 est une vue perspective présentant les différents axes d'utilisation d'un manchon élastique en tant que support-moteur pour automobile ;
- la figure 2 est une demi-vue/demi-coupe par un plan perpendiculaire à l'axe de la pièce formant manchon élastique ;
- la figure 3 est une demi-coupe par un plan vertical passant par l'axe d'une variante à peigne textile intégré ;
- la figure 4 est, également, une coupe axiale d'une variante comportant un peigne rigide de limitation de course ;
- la figure 5 est une élévation-coupe de la seule pièce dite "paroi mince".

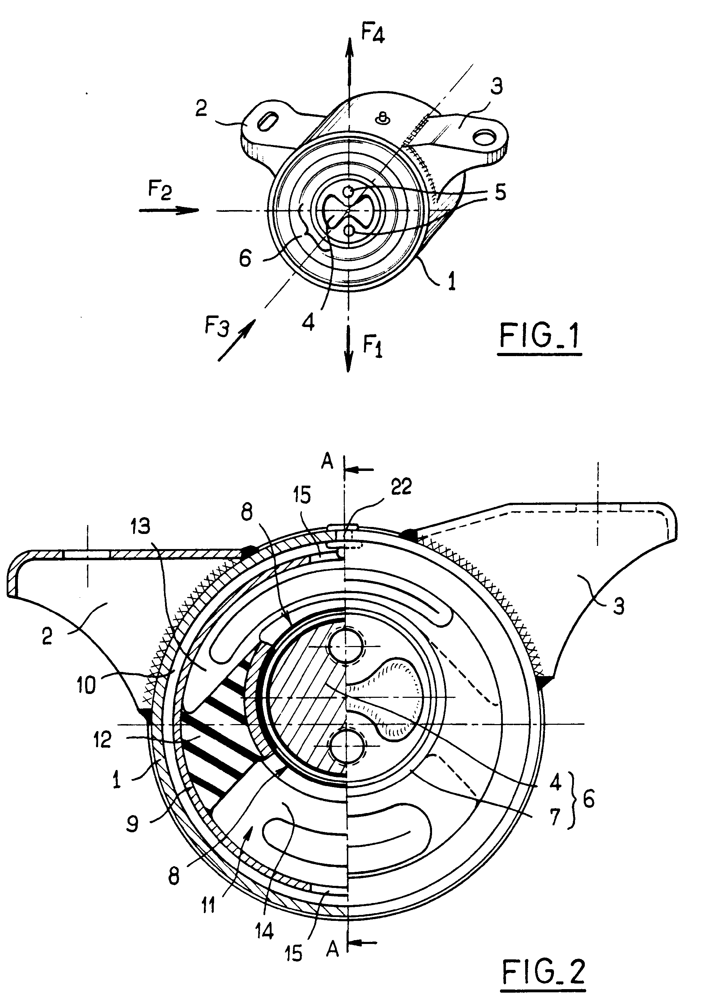

La figure 1 est une vue perspective présentant les différents axes d'utilisation de la pièce formant manchon élastique, utilisé comme l'un des supports-moteurs d'un groupe motopropulseur d'automobile, avec une charge permanente dirigée dans la direction F1.
Ladite charge permanente, au repos, peut être de faible valeur par rapport aux variations dynamiques dues à la reprise de couple, qui sont alternées entre les directions opposées F1 et F4. La direction perpendiculaire F2 représente la direction transversale au véhicule dans laquelle la rigidité radiale prescrite n'a pas besoin d'être amortie. Il en est de même pour la direction longitudinale selon F3, suivant laquelle est assurée la rigidité axiale de la pièce élastique.
Cette dernière est constituée d'une armature ronde de fixation extérieure (1), en tube métallique soudé à des oreilles de fixation (2) et (3), venant en général en appui sur des éléments du chassis, par boulonnage.

La solidarisation au moteur qui lui est suspendu se fait par une bague massive (4), par exemple en alliage d'aluminium, percée des trous de fixation (5) et de creux d'allègement, qui peuvent s'avérer nécessaires. Sur ladite bague massive (4) sont emmanchés les divers éléments constituant de l'ensemble de la bague interne de fixation (6).

La figure 2 est une demi-vue/demi-coupe, par un plan perpendiculaire à l'axe, de la pièce formant manchon élastique. L'armature ronde de fixation extérieure (1) constitue, avec les oreilles de fixation (2) et (3) qui lui sont soudées, un ensemble recevant ensuite les protections contre l'oxydation habituelles aux armatures en tôle d'acier.
La bague massive (4) est également vue dans la demi-coupe, ainsi qu'une demi-bague (7), emmanchée sur elle à l'assemblage pour constituer la bague interne de fixation (6). Sont également visibles, dans la coupe, les deux parois minces (8), caractéristiques de l'invention, entourées par une demi-bague extérieure (9), emmanchée à l'assemblage dans l'armature ronde de fixation extérieure (1). La surface emmanchée ménage, dans le plan de la coupe, un canal annulaire (10), où circule la colonne résonante de liquide amortisseur. Une demi-bague (7) munie de fenêtres et une demi-bague extérieure (9) sont intimement liées, lors de la fabrication, par une paroi latérale (11) élastique.

Dans cette coupe, figure la cloison de séparation (12), qui est partie intégrante de ladite paroi latérale (11), vue au fond de la coupe.

L'étanchéité entre une chambre supérieure (13) et une chambre inférieure (14) est assurée, lors de l'emmanchement, par l'appui réciproque des cloisons de séparation (12).

Par contre, une communication à section libre, mais à forte inertie est assurée entre lesdites chambres à travers le canal annulaire (10), grâce à deux trous de communication (15) percés dans l'épaisseur de la demi-bague extérieure (9).

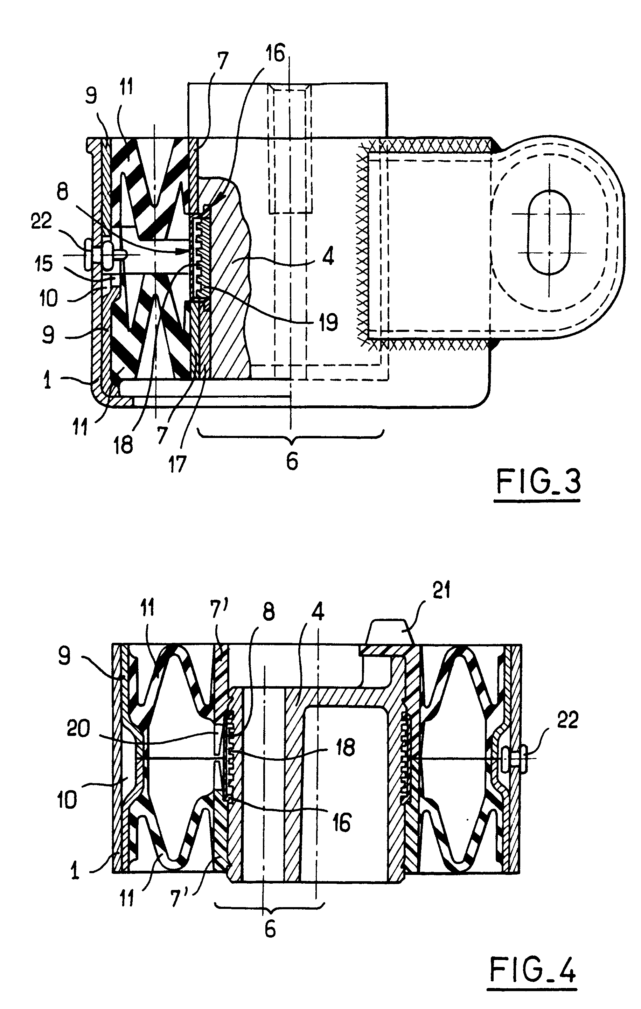

La figure 3 explicite le fonctionnement de l'amortissement hydraulique intégré au manchon élastique.
C'est une demi-coupe par un plan vertical A, passant par l'axe. Après déflexion statique, par exemple de 2 à 3 millimètres, des parois latérales (11), fabriquées excentriques et des cloisons de séparation, parties les plus massives de celles-ci, qui en sont partie intégrante, la bague interne de fixation (6) et l'armature ronde de fixation extérieure (1) deviennent sensiblement concentriques.

La coupe montre comment les deux demi-bagues extérieures (9), localement rétreintes sur quelques millimètres de part et d'autre du plan médian, , peuvent ménager le canal annulaire (10), entre elles et l'armature ronde de fixation extérieure (1). Soit l'une chevauchant l'autre, comme représenté, soit toutes deux cylindriques avec rétreint sur une partie de leur longueur, lesdites demi-bagues extérieures (9) peuvent venir buter de chant l'une sur l'autre. L'étanchéité médiocre obtenue par le contact de chant entre tôles d'acier bout à bout, peut agir sur la circulation franche du liquide dans le canal annulaire (10), l'effet étant d'élargir, en fréquence, le système résonant, ce qui peut s'avérer opportun dans certaines applications.

Dans le même ordre d'idée, l'étanchéité assurée par appui réciproque des cloisons de séparation (12) est limitée, en pression, en cas de choc, par un décollement dudit appui qui laisse communiquer entre elles les deux chambres.

Pour l'usage normal, la disposition la plus simple est de mettre en communication avec chacune des chambres, par un trou de communication (15), en haut et en bas, les deux demi-cercles latéraux du canal annulaire (10) faisant ainsi circuler, en parallèle, deux flux symétriques de colonne résonante. Dans une variante non représentée, l'obtention d'une colonne unique de plus grande longueur est possible par obturation locale dudit canal annulaire (10), lors du moulage de l'élastomère des parois, les trous de communication (15) étant décalés, de façon à exploiter une longueur de canal de l'ordre des trois quarts de la circonférence.

La coupe des demi-bagues internes (7), simples tubes en tôle d'acier adhérisés à chaque paroi latérale (11), montre comment lesdites demi-bagues internes (7), identiques, peuvent être emmanchées sur un même diamètre : une gorge annulaire (16) est usinée dans la bague massive (4) et complétée de manière à reconstituer, après assemblage grâce à une douille intermédiaire (17), une surface symétrique qui enferme par ses bords la paroi mince (8).

Dans les autres plans, l'étanchéité hydraulique entre la chambre supérieure et la chambre inférieure doit être assurée par le remplissage de l'espace annulaire compris entre les demi-bagues internes (7) et la bague massive (4), réalisé par une épaisseur supérieure de la paroi mince (8) écrasée par lesdites bagues.
Ladite paroi mince (8) comporte un renforcement circonférentiel de cablés textiles, de façon à empêcher un bombement excessif du côté où la pression hydraulique diminue. Ce renforcement de cablés, ancré grâce à une épaisseur localement supérieure de la paroi mince (8), sur environ deux quarts opposés de circonférence, ne s'oppose pas à la compression du côté où la pression hydraulique s'accroit.
Le déplacement géométrique radial de ladite paroi mince (8) est limité vers l'intérieur, à moins d'un millimètre et, préférentiellement, à 0,5 millimètre, par sa venue en appui sur des rainures circulaires (18). Il est commode de réaliser celles-ci dans une bague plastique (19), engagée par-dessus le même diamètre de la bague massive (4) que la douille intermédiaire (17) et qui participe avec ces deux dernières à étancher les bords latéraux de la paroi mince (8). La déformation minime des volumes assurant le découplage de rigidité se fait par circulation entre les parties haute et basse, de l'air enfermé, à travers les rainures circulaires (18).

Cet espace conserve un volume sensiblement constant et il est cependant souhaitable qu'il reste rempli d'air, uniquement pour réduire l'inertie vibratoire de la paroi mince (8) dont la résonance parasite doit être repoussée à plusieurs centaines d'Hertz, hors des plages de fréquences à filtrer. Des fuites de liquide dans ce faible espace, après emmanchement ou lors de celui-ci, auraient pour conséquence -leur masse venant s'ajouter à celle des parois minces (8) - - une résonance mécanique (plus proche de 100 à 200 Hertz) susceptible de s'avérer parasite à l'isolation antivibratoire. Grâce à ce mouvement conjugé des deux parois minces (8), ladite isolation antivibratoire se trouve très bien filtrée sur une faible course, sans que n'intervienne la circulation de liquide dans le canal annulaire (10).

La figure 4 est une coupe d'une autre réalisation matérielle de la paroi mince (8), assurant la fonction de découplage de rigidité.

Pour satisfaire une masse mobile la plus faible possible, la paroi mince (8) est réalisée sans renforcement en une membrane d'élastomère du moindre poids acceptable. Elle s'appuie, en déformation radiale en direction de l'axe, sur les rainures circulaires (18) ménagées, dans cette variante, directement dans la bague massive (4).

Ladite bague massive (4) présente un seul diamètre extérieur, sur lequel sont emmanchées deux demi-bagues internes (7'), rigides, d'apparence identique, dont le matériau intimement lié aux parois latérales (11), porte un peigne (20), de dents parallèles aux génératrices.

Cette disposition permet pour ces demi-bagues internes (7') une réalisation par moulage, en alliage d'aluminium par exemple, ou en matériaux thermoplastiques ou thermodurcissables, homogènes ou renforcés de fibres courtes, telles que des fibres de verre.

Les dents du peigne (20) disposées face à face, jointivement ou non, limitent la déformation radiale de la paroi mince (8), en direction des chambres hydrauliques, à une valeur millimétrique ou inférieure, lorsqu'à haute fréquence, le liquide est sollicité. Sans circulation notable de la colonne résonante dans le canal annulaire (10), les vibrations périodiques modifiant l'excentrage entre bague interne de fixation (6) et armature ronde de fixation externe (1), provoquent un déplacement d'ensemble du liquide, d'une très faible amplitude.

L'effet de butée doit commencer à se faire sentir au-delà de 0,1 mm d'excentrage. En effet, pour que, dans les plages de fréquences voulues, un amortissement notable, de tangente Φ supérieure à 1, se produise, il est nécessaire que les débattements de la paroi mince (8) soient limités rigidement. De ce fait, peut apparaître une différentielle alternative de pression entre les chambres opposées qui oblige la colonne résonante à se mouvoir. Les amplitudes seraient théoriquement dans le rapport de sa section à celle d'un piston fictif, équivalent, qui transférerait le liquide d'une chambre à l'autre sous l'effet de l'excentrage. La déformabilité des parois latérales (11) est parasite dans ce mouvement, ce qui explique que la résonance du système masse-ressort équivalent ne soit pas aussi précise et limitée en fréquences que celle d'un système solide-ressort.

Les ordres de grandeur observés sont un doublement approximatif de la rigidité d'excentrage, à colonne bloquée, par rapport à la rigidité à vitesse lente permettant la circulation du liquide.

La forme complexe des parois latérales (11) et l'épaisseur des cloisons de séparation qui en sont partie intégrante sont choisies pour satisfaire les rigidités transversale et axiale suivant les directions F2 et F3 de la figure 1, déterminées par un cahier des charges.

Se produisant sans transfert de liquide, ces rigidités ne sont pas concernées par la mise en jeu de l'amortissement hydraulique dans les déplacements suivant l'axe F1-F4. La limitation progressive de course est également assurée par cette forme des parois latérales (11), chaque onde venant se fermer au-delà de la course à basse rigidité tant statique, qu'à basse fréquence oscillatoire. Cet effet radial s'exerce aussi bien en direction verticale qu'en direction transversale. Des butées (21), en excroissance sur la face plane, peuvent assurer la même fonction dans le sens axial du manchon élastique, si nécessaire, en venant au contact d'une paroi rigide en regard.

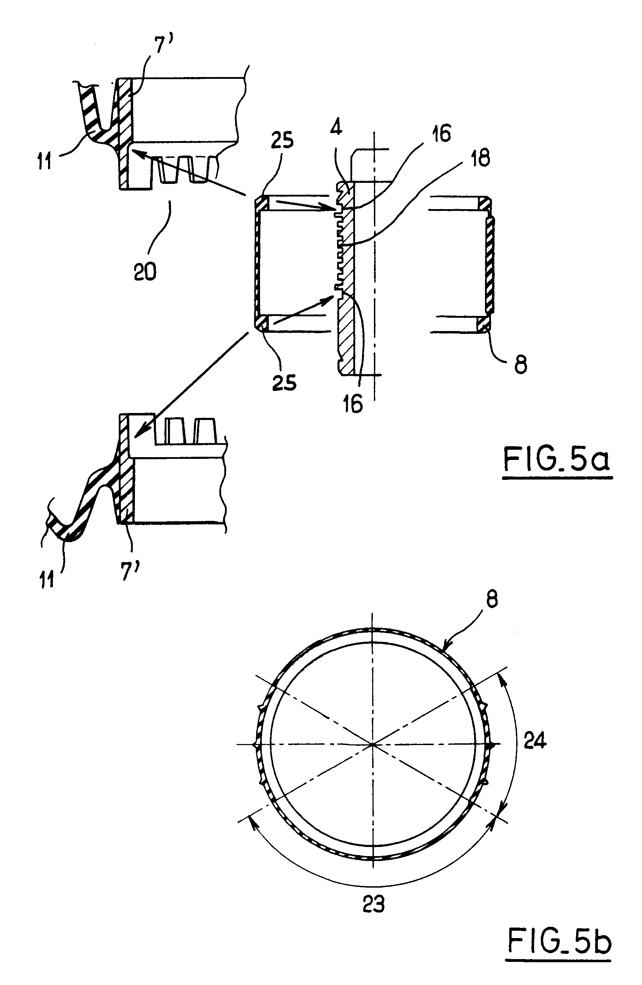

La figure 5 se compose d'une coupe axiale 5a de la paroi mince (8), comprenant les éclatés des solides entre lesquels elle est enfermée, et d'une vue 5b, en élévation. La véritable paroi mince (8) est constituée des deux parties (23) qui forment une fenêtre rectangulaire, en haut et en bas, entourées par les surépaisseurs (24), sur deux zones diamétralement opposées de la circonférence. Grâce auxdites surépaisseurs (24), la paroi mince (8) assure l'étanchéité entre les chambres supérieure et inférieure, par serrage entre la bague massive (4), qui lui est intérieure, et les demi-bagues internes (7') qui viennent l'enserrer.

De part et d'autre, chacune des parties (23) présente des bourrelets (25), de formes conjuguées à celles des gorges annulaires (16), dans lesquelles se fait l'étanchéité latérale, sous l'effet de l'emmanchement des demi-bagues internes (7'), comme illustré sur les éclatés.

Les deux gorges annulaires (16) -comme elles disposées circonférentiellement sur la bague massive (4)-, encadrent les rainures circulaires (18), où circule, sous l'effet de l'excentrage alterné, le très faible volume d'air enclos par la paroi mince (8).

Le procédé de fabrication d'un manchon élastique selon l'invention ne modifie pas les techniques habituellement utilisées par le caoutchoutier. Les deux demi-bagues constituées des parois latérales (11), intégrant chacune la moitié des deux cloisons de séparation (12), sont réalisées par un moulage assurant simultanément la vulcanisation de la composition élastomérique et la liaison intime, par adhérisation aux éléments rigides.
Chacune est, de ce fait, solidarisée à une demi-bague extérieure (9) et une demi-bague interne (7) en tube d'acier, ou bien (7') en alliage d'aluminium ou en matériaux thermoplastiques ou thermodurcissables, éventuellement renforcés de fibres courtes, telles que, à titre d'exemple non limitatif, la fibre de verre.

La paroi mince (8) est réalisée par un moulage indépendant de la composition élastomérique, éventuellement renforcée par une couche de cablés textiles qui peuvent, à titre d'exemple non limitatif, être posés par enroulement sur un noyau interne.

La mise en place de la paroi mince (8) se fait par emmanchements successifs, à la presse d'une demi-bague interne (7) ou (7') équipée, comme décrit, desdites parois latérales (11), sur la bague massive (4), en enfermant la paroi mince (8) entre la gorge annulaire (16) et la douille intermédiaire (17) ou les demi-bagues internes (7'). La bague interne de fixation (6) est ainsi réalisée pour devenir un seul solide. Les deux demi-bagues extérieures (9), ainsi reliées élastiquement à ce solide, par l'intermédiaire des parois latérales (11) sont ensuite emmanchées, de façon étanche, dans l'armature ronde de fixation extérieure (1) munie de ses oreilles de fixation (2) et (3).

L'étanchéité est assurée, sur ce dernier assemblage, par l'existence éventuelle d'une pellicule d'élastomère sur le diamètre extérieur des demi-bagues extérieures (9) ; il en est de même sur le diamètre intérieur des demi-bagues internes (7).

Il a été exposé pourquoi une étanchéité rigoureuse n'est pas nécessaire entre ces dites demi-bagues extérieures (9), sur les zones où elles butent de chant, pour former la colonne liquide dans le canal circulaire (10), enfermé entre elles et le diamètre d'emmanchement de l'armature ronde de fixation extérieure (1).

Le remplissage en liquide amortisseur, mélange d'eau et d'antigel approprié à l'utilisation, est effectué par mise au vide au moyen d'un trou percé dans ladite armature ronde de fixation extérieure (1), suivie de l'introduction de liquide et de la fermeture dudit trou par un rivet étanche (22).

Il a ainsi été constitué, par des procédés connus et pouvant être développés en grande série, un support élastique qui présente les avantages suivants :
- Du fait de sa simplicité, il n'est pas plus lourd que les dispositifs connus antérieurement et remplit les mêmes fonctions élastiques dans les trois directions, avec les limitations progressives de course nécessaires.
- Il apporte, dans la direction privilégiée supportant des efforts alternés importants, un amortissement du type visco-élastique fort efficace, compris pour 1/2 tangente Φ entre 0,5 et 1 dans une zone de fréquences basses. Il est ainsi capable de couvrir les phénomène génants de "hachis", en vertical du groupe motopropulseur et de reprise alternée du couple dits "réattelage" grâce à un bon amortissement atteignant 0,8 à ces valeurs de fréquences.
- En outre, malgré cet amortissement monodirectionnel très efficace, il présente une résilience sans amortissement, par conséquent bien filtrante aux fréquences supérieures à 20 ou 25 Hertz, comme il est demandé aux supports élastiques pour bien filtrer les vibrations émises par le moteur dans les fréquences acoustiques.
- Il est totalement interchangeable avec les dispositifs actuellement utilisés dans les domaines d'application similaires.
- Il est réalisé de manière économique, par les moyens classiques de l'industrie de transformation du caoutchouc, par assemblage de pièces simplifiées et de révolution.

La technique de réalisation offre donc aux constructeurs un compromis particulièrement économique pour satisfaire les conditions contradictoires imposées à des supports élastiques de groupes motopropulseurs ou besoins analogues.

## Revendications

1. Dispositif élastique d'isolation antivibratoire consistant en un manchon avec amortissement hydraulique de l'élasticité radiale, formé d'une armature intérieure -constituée d'une bague interne de fixation (6) composée d'une bague massive (4) et d'une demi-bague (7), munie de fenêtres, qui lui est emmanchée- d'une armature extérieure -constituée d'une armature ronde de fixation extérieure (1) et d'une demi-bague extérieure (9)- lesdites armatures intérieure et extérieure, cylindriques et d'axes parallèles, étant reliées par des parois latérales (11), déformables, en composition élastomérique, l'ensemble de ces composants définissant une cavité divisée en une chambre supérieure (13) et une chambre inférieure (14) par des cloisons de séparation (12), parties intégrantes desdites parois latérales (11), les surfaces de l'armature intérieure (6) qui limitent lesdites chambres supérieure (13) et inférieure (14) étant munies d'une paroi mince (8), l'amortissement hydraulique de l'élasticité radiale se faisant par circulation de liquide entre lesdites chambres supérieure (13) et inférieure (14), à travers un canal annulaire de grande longueur (10) ménagé dans la périphérie de l'armature ronde de fixation extérieure (1), et un découplage en rigidité, sur une faible course, étant assuré par la déformation de ladite paroi mince (8) fermant chacune desdites chambres, déformation géométriquement limitée par appui, sur la bague interne de fixation (6) de la face intérieure de ladite paroi mince (8), baignée d'air,
caractérisé en ce que
la face extérieure de la paroi mince (8), en contact avec le liquide d'amortissement, est limitée transversalement par un peigne (20) intégré à ladite bague interne de fixation (6)
et en ce que l'étanchéité entre les deux chambres supérieure (13) et inférieure (14), assurée par l'appui réciproque de deux cloisons de séparation (12) par contact de chant sur un plan transversal aux axes des armatures intérieure et extérieure, est limitée en pression par leur décollement qui laisse communiquer entre elles lesdites chambres en cas de choc.

2. Dispositif élastique d'isolation antivibratoire constitué d'un manchon à parois latérales (11), déformables selon la revendication 1, caractérisé en ce que le peigne (20) limitant l'expansion de la paroi mince (8) vers le liquide d'amortissement est réalisé en cablés textiles disposés circonférentiellement et intimement liés à ladite paroi mince (8).

3. Dispositif élastique d'isolation antivibratoire constitué d'un manchon à parois latérales (11), déformables, selon la revendication 1, caractérisé en ce que le peigne (20) limitant l'expansion de la paroi mince (8) vers le liquide d'amortissement est rigide, constitué de métal ou de plastique et est partie intégrante de deux demi-bagues internes (7'), adhérisées à chaque paroi latérale (11), formant la bague interne de fixation (6).

4. Dispositif élastique d'isolation antivibratoire constitué d'un manchon à parois latérales (11), déformables, selon la revendication 3, caractérisé en ce que les dents du peigne (20) sont disposées parallèlement à l'axe dudit manchon à parois latérales (11), déformables.

## Claims

1. An elastic device for insulating against vibration, consisting of a sleeve with hydraulic damping of radial elasticity, formed by an internal reinforcement - constituted by an internal fixing ring (6) made up of a solid ring (4) and a half-ring (7) provided with windows, which are fitted together - by an external reinforcement - constituted by a round external fixing reinforcement (1) and by an external half-ring (9) - said internal and external reinforcements, cylindrical and with parallel axes, being connected by deformable lateral walls (11) of elastomeric composition, the assembly of these components defining a cavity divided into an upper chamber (13) and a lower chamber (14) by separation partitions (12), integral parts of said lateral walls (11), the surfaces of the internal reinforcement (6) which limit said upper (13) and lower (14) chambers being equipped with a thin wall (8), the hydraulic damping of radial elasticity being effected by the circulation of liquid between said upper (13) and lower (14) chambers, through a very long annular channel (10) provided within the periphery of the round external fixing reinforcement (1), and an uncoupling of rigidity, over a short course, taking place by the deformation of said thin wall (8) closing off each of said chambers, the deformation being geometrically limited by bearing, on the internal fixing ring (6), of the inner face of said thin wall (8), bathed in air, characterised in that the external face of the thin wall (8) in contact with the damping liquid, is limited transversely by a comb (20) connected to said internal fixing ring (6) and in that the seal between the two upper (13) and lower (14) chambers, ensured by the reciprocal bearing of two separation partitions (12) in edgewise contact in a plane transverse to the axes of the internal and external reinforcements, is limited as to pressure by their looseness which allows said chambers to communicate between themselves in the event of shock.

2. An elastic device for insulating against vibration, consisting of a sleeve having deformable lateral walls (11) according to Claim 1, characterised in that the comb (20), limiting the expansion of the thin wall (8) toward the damping liquid is made of textile cords arranged circumferentially and intimately linked to said thin wall (8).

3. An elastic device for insulating against vibration, consisting of a sleeve having deformable lateral walls (11), according to Claim 1, characterised in that the comb (20), limiting the expansion of the thin wall (8) toward the damping liquid is rigid, made of metal or plastic, and is an integral part of two internal half-rings (7'), adhered to each lateral wall (11), forming the internal fixing ring (6).

4. An elastic device for insulating against vibration, consisting of a sleeve having deformable lateral walls (11), according to Claim 3, characterised in that the teeth of the comb (20) are arranged parallel to the axis of said sleeve with deformable lateral walls (11).

## Patentansprüche

1. Elastischer Schwingungsdämpfer in Gestalt einer hydraulisch gedämpften Buchse mit radialer Elastizität aus einem Innenbeschlag
- in Gestalt eines inneren Befestigungsringes (6), der aus einem aus dem Vollen gearbeiteten Ring (4) und einem auf diesen aufgepreßten, mit Fenstern versehenen Halbring (7) besteht - und einem Außenbeschlag
- in Gestalt eines runden äußeren Befestigungsbeschlages (1) und eines äußeren Halbringes (9) -,
wobei der Innenbeschlag und der Außenbeschlag, die zylindrisch sind und zueinander parallele Achsen aufweisen, durch aus Elastomer bestehende, verformbare Seitenwände (11) verbunden sind,
wobei weiter die Gesamtheit dieser Teile einen Hohlraum bilden, der durch mit Seitenwänden (11) einstückige Trennwände (12) in eine obere Kammer (13) und eine untere Kammer (14) unterteilt ist,
wobei weiter die Oberfläche des inneren Befestiungsringes (6), der die obere (13) und die untere (14) Kammer begrenzt, mit einer dünnen Wand (8) versehen ist,
und wobei die hydraulische Dämpfung der radialen Elastizität durch das Überströmen einer Dämpfflüssigkeit zwischen der oberen (13) und der unteren (14) Kammer längs eines Ringkanals (10) großer Länge erfolgt, der im Umfang des runden äußeren Befestigungsringes (1) ausgespart ist, und über einen kleinen Hub eine Entkopplung der Steifigkeiten durch die Verformung der jede der beiden Kammern verschließende dünnen Wand (8) erfolgt, deren geometrische Verformung durch Abnützung der mit Luft beaufschlagten Innenseite der dünnen Wand auf dem inneren Befestigungsring (6) begrenzt ist,
dadurch gekennzeichnet,
daß die mit der Dämpfflüssigkeit beaufschlagte Außenseite der dünnen Wand (8) in Querrichtung begrenzt wird durch einen Kamm (20), der mit dem inneren Befestigungsring (6) einstückig ist,
und daß die Abdichtung zwischen der oberen (13) und der unteren (14) Kammer, die durch die wechselseitige Hochkant-Abstützung der beiden Trennwände (12) auf einer lotrecht zu den Achsen des Innen- und Außenbeschlags liegenden Fläche erfolgt, hinsichtlich des Drucks durch ihre Ablösung begrenzt ist, die im Falle einer Stoßbelastung eine Verbindung zwischen den beiden Kammern ermöglicht.

2. Elastischer Schwingungsdämpfer, gebildet aus einer Buchse mit verformbaren Seitenwänden (11) nach Anspruch 1, dadurch gekennzeichnet, daß der Kamm (20), der die Expansion der dünnen Wand (8) zur Dämpfflüssigkeit hin begrenzt, von umlaufenden Textilkabeln gebildet ist, die mit der dünnen Wand (8) eng verbunden sind.

3. Elastischer Schwingungsdämpfer, gebildet aus einer Buchse mit verformbaren Seitenwänden (11) nach Anspruch 1, dadurch gekennzeichnet, daß der die Expansion der dünnen Wand (8) zur Dämpfflüssigkeit hin begrenzende Kamm (20) starr ist, aus Metall oder Kunststoff gebildet ist und Bestandteil der den inneren Befestigungsring (6) bildenden beiden inneren Halbringe (7') ist, die mit jeder Seitenwand (11) verklebt sind.

4. Elastischer Schwingungsdämpfer, gebildet aus einer Buchse mit verformbaren Seitenwänden (11) nach Anspruch 3, dadurch gekennzeichnet, daß die Zähne des Kamms (20) zur Achse der Buchse mit verformbaren Seitenwänden (11) parallel angeordnet sind.
